# FASCICULE DE BREVET EUROPEEN

(11) **EP 1 446 855 B1**
(45) Date de publication et mention de la délivrance du brevet: **18.04.2018**
(21) Numéro de dépôt: 02793218.5
(22) Date de dépôt: 08.11.2002
(51) Int. Cl.: H02J 7/00, H02J 7/34

(54) **PROCEDE ET DISPOSITIF D'ALIMENTATION EN ENERGIE ELECTRIQUE D'UN APPAREIL**
ELEKTRISCHES ENERGIESPEISEVERFAHREN UND -VORRICHTUNG FÜR EIN GERÄT
METHOD AND DEVICE FOR SUPPLYING ELECTRIC POWER TO AN APPLIANCE

(30) Priorité: 09.11.2001 FR 0114538
(43) Date de publication de la demande: 18.08.2004
(73) Titulaire: Orange, 75015 Paris (FR)
(72) Inventeur: MARQUET, Didier, F-92240 Malakoff (FR)
(74) Mandataire: Regimbeau
(86) Numéro de dépôt international: PCT/FR2002/003841
(87) Numéro de publication internationale: WO 2003/041189

(56) Documents cités:
- WO-A-97/08804
- US-A- 4 959 604
- US-A- 5 387 820
- US-A- 5 715 156
- US-A- 5 847 545
- US-A- 6 137 280
- US-A1- 2001 020 802

## Description

La présente invention concerne un dispositif d'alimentation électrique portable, permettant notamment d'alimenter un appareil tel qu'un téléphone portable. Le document WO97/08804 montre un dispositif d'alimentation électrique portable comprenant un moyen de connexion permettant de brancher un appareil comportant au moins une batterie d'alimentation, un circuit d'alimentation fournissant en sortie une tension d'alimentation, un moyen de stockage d'énergie électrique rechargeable, le circuit chargeant le moyen de stockage d'énergie lorsque le circuit est branché à une source d'énergie appropriée, le moyen de connexion permettant d'alimenter l'appareil et/ou de charger la batterie d'alimentation de l'appareil à partir du moyen de stockage d'énergie. Il existe aujourd'hui de nombreux appareils électriques portables et autonomes. Ils sont autonomes grâce à une batterie électrique rechargeable qu'ils incorporent et qui parfois est amovible pour pouvoir être remplacée par une autre lorsqu'elle est déchargée. L'on peut citer à titre d'exemple les téléphones portables, les ordinateurs portables, les organiseurs ou agendas électroniques. Un inconvénient majeur découle de ce que l'autonomie de ces appareils est limitée par la capacité de stockage d'énergie de leur batterie, ce qui nécessite de les recharger régulièrement à l'aide d'un chargeur à partir du secteur d'alimentation. Le problème devient critique lorsque l'utilisateur n'a pas accès au secteur. De même, l'utilisateur n'a parfois accès au secteur que pour une courte durée, par exemple une demi-heure ou moins. Or, la charge des batteries de ces appareils requièrent très souvent au moins une heure, voir trois heures, sinon encore plus. De ce fait, la batterie de l'appareil ne sera que très partiellement rechargée.

Pour pallier cet inconvénient, il est proposé avec certains appareils un cordon permettant de le brancher sur une prise allume-cigare d'un véhicule automobile, ce qui permet de l'alimenter à partir de la batterie du véhicule. Mais l'utilisateur n'a pas toujours son véhicule à disposition ou encore pas toujours suffisamment longtemps pour recharger la batterie de son appareil.

L'invention vise à pallier au moins partiellement les inconvénients de l'art antérieur.

Ainsi, un premier but de l'invention est de faciliter l'alimentation ou la recharge d'un appareil électrique en présence de sources d'énergie électrique différentes.

Un autre but de l'invention est de prolonger l'autonomie d'appareils électriques incorporant une batterie d'alimentation rechargeable.

Encore un autre but de l'invention est de conférer une autonomie satisfaisante à de tels appareils malgré des temps de disponibilité limités de l'alimentation secteur ou autre.

Pour atteindre ce premier but, l'invention propose un dispositif d'alimentation électrique portable selon la revendication 1. Il comprend:
- un moyen de connexion permettant de brancher un appareil à alimenter ; et
- un circuit d'alimentation fournissant en sortie une tension d'alimentation pour l'appareil lorsque le circuit est branché au choix à une alimentation secteur ou à une source d'énergie électrique basse tension.

Dans le cadre de l'invention, l'on entend par basse tension une tension inférieure ou égale à de préférence 60 Volts, plus avantageusement à 40 Volts, voire 28 Volts.

Le dispositif est de préférence prévu pour accepter en entrée une basse tension quelconque comprise dans une plage allant par exemple de 3 à 60 Volts. En variante, il peut être prévu pour une ou plusieurs basses tensions prédéfinies telles que 6 Volts, 12 Volts et 24 Volts.

L'invention est tout particulièrement adaptée pour l'alimentation d'appareil présentant une entrée d'alimentation basse tension, par exemple 6 Volts, 9Volts ou 12 Volts. L'on comprendra que dans le cadre de l'invention, l'entrée d'alimentation de l'appareil peut servir selon l'appareil :
- à alimenter directement l'appareil pour le faire fonctionner - c'est-à-dire sans utiliser sa batterie d'alimentation comme tampon -, mais non pas à recharger sa batterie d'alimentation ; ou
- à recharger sa batterie d'alimentation, mais non pas à alimenter directement l'appareil pour le faire fonctionner ; ou
- à la fois à alimenter directement l'appareil pour le faire fonctionner et à recharger sa batterie d'alimentation.

Dans le cas où le dispositif est utilisé uniquement pour recharger la batterie d'alimentation d'un appareil, la batterie peut être chargée par le dispositif que la batterie soit dans l'appareil ou que la batterie ait été préalablement retirée de l'appareil pour l'opération de charge.

Selon un mode de réalisation préféré, le circuit comprend un convertisseur de tension fournissant en sortie une tension donnée servant à alimenter l'appareil, lorsque le circuit est branché à une source d'énergie électrique basse tension. Mais si le circuit est branché à une source d'énergie électrique basse tension présentant une tension comprise dans une plage de tensions prédéterminée incluant la tension que fournit en sortie le convertisseur, alors le circuit alimente l'appareil branché au moyen de connexion à partir de la source d'énergie électrique sans l'intermédiaire du convertisseur.

Selon l'invention le dispositif comprend un moyen de stockage d'énergie électrique rechargeable et dans lequel :
- le circuit charge le moyen de stockage d'énergie lorsque le circuit est branché à une source d'énergie électrique appropriée ; et
- le moyen de connexion permet d'alimenter l'appareil à partir du moyen de stockage d'énergie.

Ainsi, le dispositif permet d'alimenter l'appareil grâce au moyen de stockage chargé au moins partiellement, même si le circuit chargeur n'est plus branché à la source d'énergie électrique servant à le charger. La capacité du moyen de stockage est choisie pour pouvoir alimenter l'appareil de préférence pendant au moins une demi-heure, mais plus avantageusement pendant au moins une heure, voir deux heures. Lorsque le dispositif est utilisé pour recharger la batterie d'un appareil, il est avantageux que la capacité du moyen de stockage soit au moins égale à la capacité de stockage de la batterie de l'appareil, ou tout au moins la moitié de cette dernière.

De façon avantageuse, le circuit peut charger de façon ultrarapide le moyen de stockage d'énergie lorsque le circuit est branché à une source d'énergie électrique appropriée. Dans le cadre de l'invention, la charge ultrarapide du moyen de stockage correspond à la charge électrique du moyen de stockage à au moins 50% de sa capacité de stockage effectuée en moins d'une demi-heure, de préférence en moins d'un quart d'heure et plus avantageusement en moins de 8 minutes. Le dispositif permet ainsi des recharges rapides de son moyen de stockage même lorsque la source d'énergie électrique n'est disponible que quelques minutes tel que par exemple un homme d'affaire de passage dans sa chambre d'hôtel pendant quelques minutes entre deux rendez-vous à l'extérieur. Le dispositif permet d'alimenter l'appareil par la suite en l'absence de toute autre source d'énergie. Etant donné qu'il est de type portable, l'utilisateur peut emmener le dispositif avec lui pour alimenter son appareil dans n'importe quel lieu. Ce mode de réalisation est d'autant plus avantageux lorsque la batterie d'alimentation de l'appareil et/ou l'appareil lui-même ne sont pas conçus pour permettre une charge ultrarapide de cette batterie. En effet, le moyen de stockage procure une autonomie importante comparativement à la batterie d'alimentation de l'appareil, lorsque le temps de charge est limité par les circonstances. Très généralement, les appareils incorporant une batterie d'alimentation - tels que téléphones ou ordinateurs portables - n'autorisent pas une recharge ultrarapide de celle-ci. En effet, ni les circuits de l'appareil, ni la batterie elle-même ne supportent les courants élevés - généralement plusieurs ampères - nécessaires à une telle charge ultrarapide. Ces appareils nécessitent généralement au moins une heure, et bien souvent au moins trois heures, sinon plus, pour recharger leur batterie.

Le moyen de stockage d'énergie électrique peut comprendre une batterie rechargeable. Dans ce cas, la capacité de la batterie rechargeable est inférieure ou égale de préférence à trois fois, plus avantageusement à deux fois, voire à une fois et demi la capacité de stockage de la batterie de l'appareil, ce qui permet une compacité et un poids limité du dispositif améliorant ainsi sa portabilité.

Selon un mode de réalisation avantageux, le moyen de stockage d'énergie électrique comprend une batterie rechargeable et cette dernière comprend plusieurs cellules accumulatrices branchées en série lorsque la batterie alimente l'appareil branché au moyen de connexion, chaque cellule de la batterie étant chargée de façon ultrarapide à travers un circuit de contrôle de charge respectif.

Selon un autre mode de réalisation préféré, le circuit comprend un convertisseur de tension fournissant en sortie une tension donnée servant à la charge - éventuellement ultrarapide - du moyen de stockage d'énergie, lorsque le circuit est branché à une source d'énergie électrique basse tension, et le moyen de stockage d'énergie alimente l'appareil branché au moyen de connexion par l'intermédiaire du convertisseur fonctionnant en élévateur de tension lorsque la tension aux bornes du moyen de stockage d'énergie est inférieure à un seuil prédéterminé.

De plus, il peut être prévu que lorsque le circuit est branché à une source d'énergie électrique basse tension présentant une tension comprise dans une plage de tensions prédéterminée incluant la tension que fournie en sortie le convertisseur, le circuit alimente l'appareil branché au moyen de connexion, et/ou charge le moyen de stockage d'énergie, à partir de la source d'énergie électrique sans l'intermédiaire du convertisseur.

Selon encore un autre mode de réalisation préféré, le circuit comprend un convertisseur de tension fournissant en sortie une tension donnée servant à la charge du moyen de stockage d'énergie et/ou à alimenter l'appareil branché au moyen de connexion, lorsque le circuit est branché à une source d'énergie électrique basse tension. Mais lorsque le circuit est branché à une source d'énergie électrique basse tension présentant une tension comprise dans une plage de tensions prédéterminée incluant la tension que fournit en sortie le convertisseur, alors le circuit alimente l'appareil branché au moyen de connexion et/ou charge le moyen de stockage d'énergie, à partir de la source d'énergie électrique sans l'intermédiaire du convertisseur.

Selon l'invention lorsque le circuit est branché à une source d'énergie électrique présentant une tension inférieure à un seuil prédéterminé, le circuit alimente l'appareil branché au moyen de connexion, mais ne charge pas le moyen de stockage d'énergie.

Par ailleurs, le dispositif peut avantageusement comprendre un circuit limitant le courant fourni à l'appareil.

Le dispositif peut comprendre en outre un panneau solaire permettant d'alimenter l'appareil et/ou charger le moyen de stockage d'énergie.

Selon un autre mode de réalisation préféré, le dispositif comprend des moyens de connexion pour connecter un moyen de stockage d'énergie électrique amovible et portable dans lequel, lorsque ledit moyen de stockage d'énergie électrique amovible est connecté aux dits moyens de connexion, le circuit d'alimentation charge de façon ultrarapide le moyen de stockage d'énergie amovible lorsque le circuit d'alimentation est branché à une source d'énergie électrique appropriée. Dans ce cas, le dispositif peut comprendre ou non un autre moyen de stockage non amovible tel que décrit précédemment. Le moyen de stockage d'énergie amovible peut comprendre une batterie rechargeable. Le moyen de stockage amovible ainsi chargé peut être débranché du dispositif et permet ensuite d'alimenter un appareil - par exemple pour recharger la batterie de l'appareil s'il en dispose - en l'absence de toute autre source d'énergie. Etant donné qu'il est de type portable, l'utilisateur peut emmener le moyen de stockage amovible avec lui pour alimenter son appareil dans n'importe quel lieu. Les indications préférentielles concernant le choix de la capacité du moyen de stockage d'énergie du dispositif données plus haut s'appliquent également au moyen de stockage amovible.

L'invention propose aussi l'utilisation du dispositif de l'invention pour alimenter un appareil électrique. L'appareil est de préférence de type portable, avantageusement un téléphone portable ou un ordinateur portable ou un agenda électronique de poche. Une utilisation avantageuse réside dans le fait que le dispositif de l'invention recharge une batterie d'alimentation (2) de l'appareil électrique.

Par ailleurs, l'on comprendra que la charge d'un moyen de stockage d'énergie de l'invention peut être mise en oeuvre indépendamment du fait que le dispositif de l'invention puisse être branché en entrée au choix à une alimentation secteur et à une source d'énergie électrique basse tension.

L'invention permet de recharger le moyen de stockage dans des situations où la source d'énergie électrique est disponible peu de temps, par exemple, un homme d'affaire de passage dans sa chambre d'hôtel pendant quelques minutes entre deux rendez-vous à l'extérieur. Le moyen de stockage ainsi chargé permet ensuite d'alimenter son appareil en l'absence de toute autre source d'énergie. Etant donné qu'il est de type portable, l'utilisateur peut emmener le moyen de stockage avec lui pour alimenter son appareil dans n'importe quel lieu. L'invention est tout particulièrement adaptée pour l'alimentation d'appareil présentant une entrée d'alimentation basse tension, par exemple 6 Volts, 9Volts ou 12 Volts.

L'invention est d'autant plus avantageuse lorsque la batterie d'alimentation de l'appareil et/ou l'appareil lui-même ne sont pas conçus pour permettre une charge ultrarapide de cette batterie. En effet, le moyen de stockage procure une autonomie importante comparativement à la batterie d'alimentation de l'appareil, lorsque le temps de charge est limité par les circonstances. Très généralement, les appareils incorporant une batterie d'alimentation - tels que téléphones ou ordinateurs portables - n'autorisent pas une recharge ultrarapide de celle-ci. En effet, ni les circuits de l'appareil, ni la batterie elle-même ne supportent les courants élevés - généralement plusieurs ampères - nécessaires à une telle charge ultrarapide. Ces appareils nécessitent généralement au moins une heure, et bien souvent au moins trois heures, sinon plus, pour recharger leur batterie.

L'on comprendra que dans le cadre de l'invention, l'entrée d'alimentation de l'appareil peut servir selon l'appareil :
- à alimenter directement l'appareil pour le faire fonctionner - c'est-à-dire sans utiliser sa batterie d'alimentation comme tampon -, mais non pas à recharger sa batterie d'alimentation ; ou
- à recharger sa batterie d'alimentation, mais non pas à alimenter directement l'appareil pour le faire fonctionner ; ou
- à la fois à alimenter directement l'appareil pour le faire fonctionner et à recharger sa batterie d'alimentation.

Ainsi, suivant un mode de réalisation préféré de l'invention, dans l'étape b), le moyen de stockage d'énergie peut servir à recharger la batterie d'alimentation de l'appareil. Dans ce cas, il est avantageux que la capacité du moyen de stockage soit au moins égale à la capacité de stockage de la batterie de l'appareil, ou tout au moins la moitié de cette dernière. Le moyen de stockage permet alors de recharger de façon sensible la batterie de l'appareil. Dans ce cas, la capacité du moyen de stockage surtout s'il comprend une batterie rechargeable, est inférieure ou égale de préférence à trois fois, plus avantageusement à deux fois, voire à une fois et demi la capacité de stockage de la batterie de l'appareil, ce qui permet une compacité et un poids limité améliorant ainsi sa portabilité.

Ce mode de réalisation de l'invention est là encore particulièrement avantageux lorsque la batterie d'alimentation de l'appareil et/ou l'appareil lui-même ne sont pas conçus pour permettre une charge ultrarapide de sa batterie. Ce mode de réalisation permet une charge du moyen de stockage même si la source d'énergie électrique -par exemple le secteur ou une prise allume-cigare d'une voiture- est disponible que quelques minutes. Du fait qu'il est de type portable, l'utilisateur peut emmener le moyen de stockage avec lui pour recharger grâce à celui-ci la batterie de son appareil alors même qu'il n'a plus accès à la source d'énergie électrique.

Selon un autre mode de réalisation de l'invention, dans l'étape b), le moyen de stockage d'énergie est branché à l'entrée d'alimentation de l'appareil par l'intermédiaire d'un circuit limitant le courant fourni à l'appareil. Ce circuit limiteur protège notamment l'appareil contre des surintensités qui pourraient le détériorer.

Selon un autre mode de réalisation de l'invention, dans l'étape a), la charge du moyen de stockage d'énergie est effectuée à l'aide d'un chargeur prévu pour être branché au choix à une alimentation secteur ou à une source d'énergie électrique basse tension. Comme déjà indiqué, dans le cadre de l'invention, l'on entend par basse tension une tension inférieure ou égale à 60 Volts.

Selon encore un autre mode de réalisation de l'invention, dans l'étape a), la charge du moyen de stockage d'énergie est effectuée à l'aide d'un chargeur prévu également pour alimenter l'appareil. Il est ainsi possible de simultanément charger le moyen de stockage et d'alimenter l'appareil, ainsi que de charger la batterie de ce dernier le cas échéant.

Par ailleurs, l'appareil à alimenter est de préférence du type portable. Il peut s'agir avantageusement d'un téléphone portable ou d'un ordinateur portable ou d'un agenda électronique de poche.

Selon un autre aspect, l'invention propose encore un dispositif d'alimentation électrique portable, comprenant :
- un moyen de stockage d'énergie électrique rechargeable ;
- un circuit chargeur chargeant de préférence de façon ultrarapide le moyen de stockage d'énergie lorsqu'il est branché à une source d'énergie électrique appropriée ; et
- un moyen de connexion permettant de brancher un appareil pour alimenter celui-ci à partir du moyen de stockage d'énergie.

Le dispositif selon l'invention permet d'alimenter l'appareil grâce au moyen de stockage chargé au moins partiellement, même si le circuit chargeur n'est plus branché à la source d'énergie électrique servant à le charger. La capacité du moyen de stockage est choisie pour pouvoir alimenter l'appareil de préférence pendant au moins une demi-heure, mais plus avantageusement pendant au moins une heure, voir deux heures.

Si la charge du moyen de stockage est de type ultrarapide, ce dispositif permet des recharges rapides de son moyen de stockage même lorsque la source d'énergie électrique n'est disponible que quelques minutes, le dispositif permettant d'alimenter l'appareil par la suite en l'absence de toute autre source d'énergie.

Selon un mode de réalisation de l'invention, le moyen de stockage d'énergie électrique comprend une batterie rechargeable.

Par ailleurs, la batterie peut comprendre plusieurs cellules accumulatrices branchées en série lorsque la batterie alimente l'appareil branché au moyen de connexion et chaque cellule peut avantageusement être chargée de façon ultrarapide à travers un circuit de contrôle de charge respectif.

Selon un autre mode de réalisation de l'invention, le circuit chargeur alimente l'appareil branché au moyen de connexion, lorsque le circuit chargeur est branché à la source d'énergie électrique.

Selon encore un autre mode de réalisation de l'invention, le circuit chargeur est apte à être branché au choix à une alimentation secteur ou à une alimentation basse tension.

Selon encore un autre mode de réalisation de l'invention, le circuit chargeur comprend un convertisseur de tension fournissant en sortie une tension donnée servant à la charge ultrarapide du moyen de stockage d'énergie, lorsque le dispositif est branché à une source d'énergie électrique basse tension, et en ce que le moyen de stockage d'énergie alimente l'appareil branché au moyen de connexion par l'intermédiaire du convertisseur fonctionnant en élévateur de tension lorsque la tension aux bornes du moyen de stockage d'énergie est inférieure à un seuil prédéterminé.

Il est également avantageux que, lorsque le circuit chargeur est branché à une source d'énergie électrique basse tension présentant une tension comprise dans une plage de tensions prédéterminée incluant la tension que fournie en sortie le convertisseur, le circuit chargeur alimente l'appareil branché au moyen de connexion, et/ou charge le moyen de stockage d'énergie, à partir de la source d'énergie électrique sans l'intermédiaire du convertisseur. Suivant l'invention, lorsque le circuit chargeur est branché à une source d'énergie électrique présentant une tension inférieure à un seuil prédéterminé, le circuit chargeur alimente l'appareil branché au moyen de connexion, mais ne charge pas le moyen de stockage d'énergie. Suivant l'invention, lorsque le circuit est branché à une source d'énergie électrique présentant une tension supérieure ou égale audit seuil prédéterminé, le circuit alimente l'appareil branché au moyen de connexion et charge le moyen de stockage d'énergie. De façon générale, l'invention a pour avantage de ne pas exiger de modifications des appareils électriques à alimenter, en particulier de l'interface physique de connexion servant d'entrée d'alimentation des appareils. Dès lors, l'invention peut être mise en oeuvre pour tout appareil électrique existant.

D'autres caractéristiques et avantages de l'invention apparaîtront à la lecture de la description qui suit de modes de réalisation préférés de l'invention, donnée à titre d'exemple et en référence au dessin annexé.
La figure 1 représente le schéma de principe d'une alimentation selon l'invention, prévue pour recharger la batterie d'un téléphone portable.
La figure 2 représente une variante de l'alimentation de la figure 1.
La figure 3 représente une variante de l'alimentation de la figure 2.
La figure 4 représente une variante de l'alimentation de la figure 3.
La figure 5 représente une variante de l'alimentation de la figure 2 qui permet un contrôle individuel de la charge de chaque cellule accumulatrice constituant la batterie équipant cette alimentation.

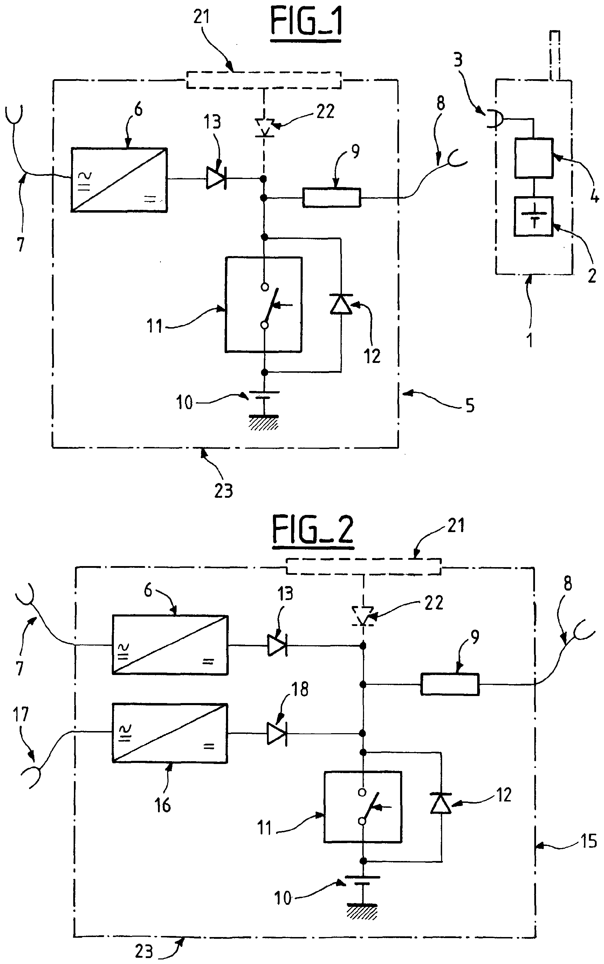

Dans un souci de simplification, l'alimentation du mode de réalisation de la figure 1 n'est pas prévue pour être raccordée à une source basse tension, mais seulement à une alimentation secteur. Ainsi, l'exposé permet d'abord de comprendre les autres aspects de l'invention avant de décrire en référence à la figure 1 les modes de réalisations des autres figures qui comprennent une possibilité de raccordement à une source basse tension.

L'alimentation 5 illustrée à la figure 1 est prévue pour être utilisée avec un téléphone portable 1. Le téléphone portable 1 peut être d'un type connu quelconque. Classiquement, celui-ci est alimenté par une batterie rechargeable 2 qui est logée dans son boîtier.

Le boîtier du téléphone 1 est généralement muni d'un connecteur 3 servant à recharger la batterie 2 à travers un circuit de contrôle 4. Le circuit de contrôle 4 sert notamment à vérifier le niveau de charge de la batterie 2 pour en informer l'utilisateur ainsi que de la nécessité ou non de recharger la batterie 2 et/ou à protéger la batterie 2 contre un usage abusif.

La recharge de la batterie 2 est réalisée en appliquant sur le connecteur 3 une tension d'environ 5 Volts continue qui est fournie en l'occurrence par l'alimentation 5 selon l'invention.

Pour cela, l'alimentation 5 comprend un circuit convertisseur 6 qui fournit en sortie une tension continue de 6 Volts à partir du secteur appliqué à son entrée. Le convertisseur 6 peut être de tout type classique approprié. Notamment, il peut s'agir d'un circuit d'alimentation conventionnel basé sur un transformateur, un pont de Graetz et un condensateur de filtrage. Néanmoins, il est préférable d'utiliser une alimentation à découpage qui a pour avantage d'être plus compacte et légère.

Le convertisseur 6 est de préférence prévu pour accepter en entrée les tensions alternatives des alimentations secteurs existantes dans les différents pays, en particulier 110 Volts 60 Hz et 220 à 240 Volts, 50 Hz.

Plus avantageusement, le convertisseur 6 peut être mis en oeuvre sous la forme d'une alimentation à découpage s'adaptant automatiquement en entrée à l'ensemble d'une plage de tensions alternatives ou continues couvrant les différentes tensions d'alimentation secteur existant dans le monde. Ainsi, le convertisseur 6 peut être prévu pour recevoir en entrée une tension quelconque comprise dans une plage allant de 80 à 240 Volts alternatif - 50 ou 60 Hz - ou dans une plage allant de 100 à 350 Volts continu. L'entrée du convertisseur 6 peut être classiquement branchée au secteur par le biais d'un cordon 7 muni à son extrémité d'une fiche mâle.

L'alimentation 5 comprend une batterie rechargeable 10. La sortie du convertisseur 6 est reliée à la batterie 10 pour la recharger lorsque l'alimentation 5 est branchée au secteur.

Le convertisseur 6 est de préférence prévu pour réaliser une charge ultrarapide de la batterie 10. La batterie 10 est choisie par conséquent pour tolérer une telle charge ultrarapide et le convertisseur 6 est conçu pour délivrer un courant suffisant pour permettre cette charge. De telles batteries, notamment du type nickel-cadnium sous forme cylindrique étanche, sont par exemple commercialisées par la société française Saft. Un circuit 11 contrôle le courant de charge appliqué à la batterie 10. Sur la figure 1, le circuit de contrôle 11 a été représenté symboliquement sous la forme d'un interrupteur commandé. En pratique, ce circuit de contrôle 11 peut être mis en oeuvre de façon connue, en suivant notamment les prescriptions du fabricant de batterie. Il pourra notamment être basé sur un transistor MOS utilisé en commutation. Généralement, la charge ultrarapide consiste à appliquer un courant élevé constant jusqu'à ce que la tension aux bornes de la batterie - ou à chacune de ses cellules - atteint un seuil prédéfini, ce qui permet généralement de recharger la batterie à environ 75 % de sa capacité, voir plus. La charge peut ensuite être poursuivie de façon plus lente, à des courants plus faibles. Généralement, il est également souhaitable d'effectuer un contrôle du courant de charge de la batterie en fonction de la température de la batterie. Ce rôle peut aussi être assuré par le circuit 11.

Par ailleurs, la batterie 10 est reliée à un cordon 8 muni à son extrémité d'un connecteur permettant de relier l'alimentation 5 au connecteur 3 du téléphone portable 1. Pour établir cette liaison, le circuit de contrôle de charge 11 peut être ponté par une diode 12. La diode 12 est de préférence une diode Shottky en raison de la faible chute de tension présente à ses bornes lorsqu'elle est passante. La batterie 10 permet ainsi de recharger la batterie du téléphone 1 et/ou d'alimenter directement le téléphone 1. Bien entendu, si le circuit de contrôle 11 est basé sur un interrupteur bidirectionnel, le rôle de la diode 12 peut être également assumé par l'interrupteur du circuit de contrôle 11 auquel cas la diode 12 est superflue.

L'alimentation 5 comprend de préférence un circuit 9 limitant le courant fourni par la batterie 10 au téléphone 1. Le circuit limiteur de courant 9 sert à protéger le téléphone portable 1 contre les surintensités qui pourraient le détériorer - ceci tout particulièrement lors de la charge de la batterie 2 par l'alimentation 5 - car le circuit de contrôle 4 du téléphone 1 n'assure généralement pas cette fonction ou de façon insuffisante. Dans une version simple, le circuit limiteur de courant 9 peut consister en une simple résistance. Mais il peut également s'agir d'un interrupteur commandé - tel qu'un transistor MOS - hachant le courant en fonction de l'évolution du courant de charge fourni à la batterie 2.

Le choix de la batterie 10 en ce qui concerne sa capacité de stockage est fait en considération de la consommation énergétique de l'appareil à alimenter, en l'occurrence, en considération de la capacité de la batterie du téléphone 1. Généralement, l'on choisit une capacité de stockage de la batterie 10 suffisante pour recharger complètement la batterie 2 ou au moins à 90 %. Ainsi, la capacité de stockage est choisi préférentiellement au moins égale à celle de la batterie 2. Bien évidemment, elle peut également être nettement supérieure à celle de la batterie de l'appareil à recharger pour permettre plusieurs charges de cette dernière. Dans la mesure où l'alimentation 5 est du type portable, le choix s'effectue également en considération du poids et de la taille de la batterie 10, ainsi que du convertisseur 6 qui doit fournir un courant de charge qui est d'autant plus important dans le cas d'une charge ultrarapide de la batterie 10.

Le choix de la batterie 10 en ce qui concerne sa tension est fait en considération de la tension d'alimentation requise par l'appareil à alimenter. Pour un téléphone portable dont la batterie 2 est par exemple du type Lithium-Ion 3,6V, la tension aux bornes de celle-ci varie entre 2,5 et 4,2 Volts environ en fonction de son niveau de charge. Par conséquent, la tension de la batterie 10 est de préférence choisie pour suffire à charger la batterie 2 jusqu'à 4,2 Volts, compte tenu des chutes de tension introduites par les éléments intermédiaires entre la batterie 10 et la batterie 2, c'est-à-dire notamment la diode 12, le circuit limiteur de courant 9 et la circuit de contrôle 4. A titre d'exemple, on peut utiliser une batterie Nickel-Cadnium de 6 Volts - c'est-à-dire cinq cellules de 0,9 Volt chacune - dont la tension varie de 4,5 Volts à 7,5 Volts environ en fonction de son niveau de charge.

Bien entendu, le convertisseur 6 est de préférence choisi pour délivrer une tension suffisante pour charger entièrement la batterie 10. Ainsi, dans notre exemple, la tension délivrée par le convertisseur 6 peut être de l'ordre de 8 ou 9 Volts.

Dans le cas où la tension de la batterie 10 est trop importante par rapport à celle que peut admettre l'appareil à alimenter, l'alimentation 5 peut comprendre un circuit limitant la tension de sortie appliquée au cordon 8, ce circuit pouvant par exemple être basé sur une diode zéner.

Au contraire, dans le cas où la batterie 10 est choisie avec une tension trop faible par rapport à celle requise par l'appareil extérieur, l'alimentation 5 peut être complété par un circuit élévateur de tension pour élever la tension fournie par la batterie 10 à un niveau suffisant.

Par ailleurs, la sortie du convertisseur 6 est reliée au cordon 8, le cas échéant par le biais du circuit limiteur de courant 9 et/ou le circuit limiteur de tension précité. Ainsi, le convertisseur 6 alimente directement l'appareil extérieur lorsqu'il est branché au secteur. De la sorte, le convertisseur 6 charge la batterie 10 en même temps qu'il alimente l'appareil extérieur. Néanmoins, cette liaison entre la sortie du convertisseur 6 et le cordon 8 peut être omise. Dans ce cas, l'alimentation ne peut pas alimenter directement l'appareil 1.

Une diode 13 est de préférence prévue à la sortie du convertisseur 6 pour éviter la décharge éventuelle de la batterie 10 et/ou de la batterie 2 de l'appareil extérieur, à travers le convertisseur 6.

L'alimentation 5 permet avantageusement de charger sa batterie 10 en quelques minutes lorsque l'utilisateur a accès au secteur. Eventuellement, elle permet simultanément de commencer la charge de la batterie 2 du téléphone 1 depuis le secteur. Lorsque le secteur n'est plus disponible, l'alimentation 5 commence ou poursuit la charge de la batterie 2 à partir de l'énergie stockée dans sa batterie 10.

L'alimentation 15 de la figure 2 est une version plus développée de l'alimentation 5 de la figure 1. Elle comprend à l'identique, et avec le même fonctionnement, tous les éléments de l'alimentation 5 qui sont par conséquent désignés par les mêmes références sur la figure 2. Dans notre exemple, l'alimentation 15 est également destinée à être utilisée avec le téléphone 1 non représenté sur la figure 2. Elle comprend en outre des circuits supplémentaires.

Ainsi, l'alimentation 15 comprend un deuxième convertisseur 16 fournissant en sortie la même tension que le premier convertisseur 6, mais à partir d'une basse tension appliquée en entrée. Il s'agit de préférence d'un convertisseur acceptant en entrée une tension comprise dans une plage de 3 à 15 Volts, voir de 3 à 25 Volts, continue ou alternative. Ce convertisseur peut être de tout type connu approprié. Il pourra s'agir notamment d'une structure dite « buck-boost » qui abaisse ou élève la tension d'entrée pour fournir une tension de sortie prédéterminée. La sortie du convertisseur 16 alimente la batterie 10 et de préférence aussi l'appareil extérieur, de façon similaire au convertisseur 6. Ainsi, la sortie du convertisseur 16 peut charger la batterie 10 par l'intermédiaire du circuit de contrôle de charge 11 et alimenter l'appareil extérieure branché au cordon 8 par le biais, le cas échéant, du circuit limiteur de courant 9 et du circuit limiteur de tension déjà cité pour l'alimentation 5. L'entrée du convertisseur est reliée à un cordon 17 muni d'un ou plusieurs connecteurs permettant la connexion avec différents types de sources électriques basse tension. A titre d'exemple, il peut s'agir d'une pile électrique 9 Volts, une dynamo de vélo 6 Volts ou la batterie 12 Volts d'un véhicule automobile sur laquelle il est possible de se connecter sur l'allume-cigare. Ainsi, des sources d'énergie électrique basse tension permettent de charger la batterie 10 et/ou d'alimenter directement l'appareil extérieur, de façon similaire au convertisseur 6 à partir du secteur.

Une diode 18 est de préférence prévue à la sortie du convertisseur 16 pour éviter que les batteries 2 ou 10 ne puissent se décharger à travers le convertisseur 16 ou encore que le convertisseur 6 ne puisse injecter un courant dans ce dernier. De façon similaire, la diode 13 évite que le convertisseur 16 ne puisse injecter un courant dans la sortie du convertisseur 6.

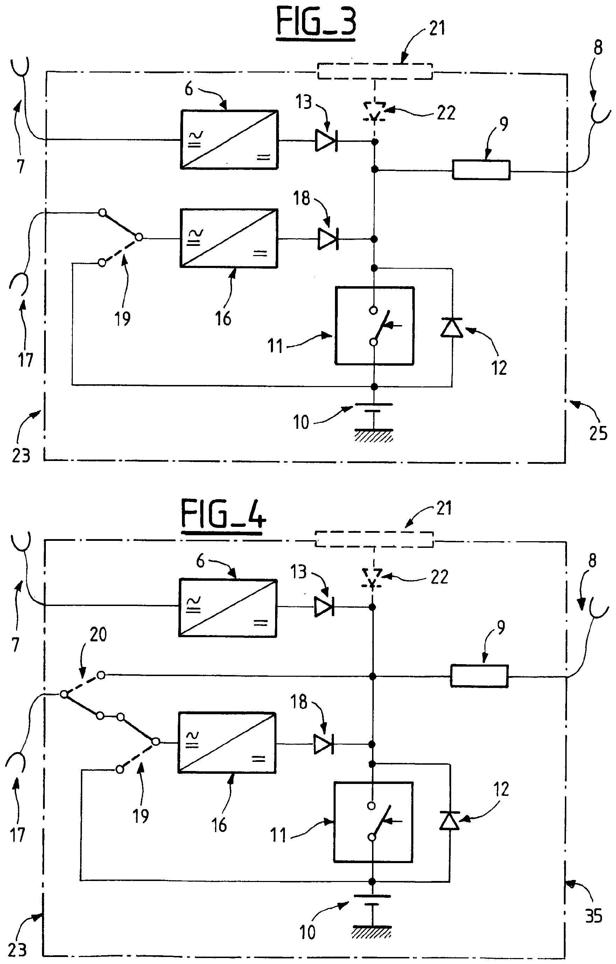

L'alimentation 25 de la figure 3 est une variante de l'alimentation 15 de la figure 2. Elle comprend à l'identique, et avec le même fonctionnement, tous les éléments de l'alimentation 15 qui sont par conséquent désignés par les mêmes références sur la figure 3. Dans notre exemple, l'alimentation 25 est également destinée à être utilisée avec le téléphone 1 non représenté sur la figure 3.

L'alimentation 25 se distingue de l'alimentation 15 en ce qu'elle comprend en outre un interrupteur inverseur commandé 19 qui peut être mis en oeuvre à l'aide de transistors par exemple. Cet inverseur 19 permet de relier l'entrée du convertisseur 16 sélectivement à la source d'alimentation basse tension branchée au cordon 17 ou à la batterie 10. Un circuit- non représenté - commande l'inverseur 17 pour relier le cordon 17 à l'entrée du convertisseur 16 lorsque la source d'alimentation basse tension est effectivement branchée au cordon 17. A cette fin, la présence de la source d'alimentation basse tension peut être déterminée par la détection de sa tension aux bornes du cordon 17, par exemple à l'aide d'un circuit comparateur à amplificateur opérationnel. Dans ce cas, l'alimentation se trouve dans la configuration de l'alimentation 15. En revanche, lorsque l'alimentation 25 est en train d'alimenter l'appareil extérieur branché au cordon 8 alors qu'aucune des sources d'alimentation - ni le secteur, ni la source basse tension - n'est branchée aux cordons 7 et 17, le circuit de commande de l'inverseur 19 peut provoquer la commutation de l'inverseur 17 pour relier la batterie 10 à l'entrée du convertisseur 16. Autrement dit, la batterie 10 alimente alors l'appareil extérieur par l'intermédiaire du convertisseur 16. Cette possibilité est avantageuse étant donné que la tension aux bornes de la batterie 10 diminue progressivement en fonction de sa décharge. Ainsi, elle permet d'élever la tension de la batterie 10 à un niveau suffisant pour continuer à alimenter l'appareil extérieur dans le cas où la tension aux bornes de la batterie 10 devient trop faible. Cette possibilité permet donc de tirer plus pleinement profit de la capacité de stockage de la batterie 10. Cette dernière pourra aussi être constituée d'un nombre de cellules d'accumulateur moindre pour définir une batterie ayant une tension inférieure. Il en résulte un gain en poids et en taille. A titre d'exemple, pour le téléphone 1 ayant une batterie de type Lithium-Ion 3,6V, la batterie 10 peut être constituée de quatre cellules Nickel-Cadnium de 1,2 Volts, au lieu de cinq dans l'exemple cité pour l'alimentation 5. Il en résulte une batterie de 4,8 Volts dont la tension varie entre 3,6 Volts et 6 Volts selon son niveau de charge. Lorsqu'elle passe en dessous de 5 Volts, la tension de la batterie 10 devient insuffisante pour charger la batterie 2 à une tension de 4,2 Volts compte tenu des chutes de tension introduites par les éléments intermédiaires : diode 12, circuit limiteur de courant 9, circuit de contrôle 4, etc... D'où, le circuit de commande de l'inverseur 19 peut être prévu pour relier la batterie 10 à l'entrée du convertisseur 16 dès que la tension de la batterie 10 passe en dessous de 5 Volts. Dès lors, c'est la tension de sortie - plus élevée - du convertisseur 16 qui alimente la batterie 2. Par ailleurs, la tension de sortie fournie par les convertisseurs 6 et 16 peut être de l'ordre de 6 ou 7 Volts, au lieu des 8 ou 9 Volts précités dans le cas de l'alimentation 5.

L'alimentation 35 de la figure 4 est une variante de l'alimentation 25 de la figure 3. Elle comprend à l'identique, et avec le même fonctionnement, tous les éléments de l'alimentation 25 qui sont par conséquent désignés par les mêmes références sur la figure 3. Dans notre exemple, l'alimentation 25 est également destinée à être utilisée avec le téléphone 1 non représenté sur la figure 4.

L'alimentation 35 se distingue de l'alimentation 25 en ce qu'elle comprend en outre un autre interrupteur inverseur commandé 20 qui peut être mis en oeuvre à l'aide de transistors par exemple. Cet inverseur 20 permet de relier la source d'alimentation basse tension branchée au cordon 17 sélectivement à l'entrée du convertisseur 16 via, le cas échéant, l'inverseur 19 ou au cordon 8 via, le cas échéant, le circuit limiteur de courant 9. Dans la première position de l'inverseur 20, l'alimentation 35 se retrouve dans les configurations décrites précédemment. Dans l'autre position, la source d'énergie basse tension alimente l'appareil extérieure via le circuit limiteur de courant 9 et la batterie 10, sans passer par le convertisseur 16. Un circuit de commande - non représenté - met l'inverseur 20 dans cette autre position lorsque la tension de la source d'alimentation connectée au cordon 17 se situe dans une plage acceptable pour être appliquée directement à l'appareil extérieur et à la batterie 10. L'on évitera ainsi les pertes de rendement liées au convertisseur 16. A titre d'exemple, pour le téléphone 1 ayant une batterie de type Lithium-Ion 3,6V, cette plage de tension peut être de 5,5 à 7 Volts.

L'on comprendra que cette variante peut aussi être mise en oeuvre en l'absence de l'inverseur 19 permettant de relier la batterie 10 à l'entrée du convertisseur 16. Autrement dit, cette variante peut être mis en oeuvre sur l'alimentation 15 de la figure 2. Il suffit pour cela de relier la borne de l'interrupteur 20 - qui est reliée sur la figure 4 à l'une des bornes de l'inverseur 19 - directement à l'entrée du convertisseur 16.

Dans une autre variante qui est applicable à n'importe laquelle des alimentations précédentes présentant un convertisseur basse tension 16 - c'est-à-dire les alimentations 15, 25 et 35 -, l'alimentation est prévue pour ne pas charger la batterie 10, mais uniquement alimenter l'appareil extérieur, lorsque l'alimentation est branchée non pas sur le secteur par le cordon 7, mais seulement sur une source d'énergie basse tension inférieure à 12 Volts par le cordon 17. Au contraire, lorsqu'elle est branchée au choix à une source d'énergie basse tension supérieure ou égale à 12 Volts ou au secteur, l'alimentation assure de préférence simultanément la charge de la batterie 10 et l'alimentation de l'appareil extérieur connecté au cordon 8 comme cela a été décrit précédemment. Néanmoins, lorsque l'appareil extérieur n'est pas branché au cordon 8, l'alimentation charge la batterie 10 quelle que soit la source d'énergie disponible en entrée. Si le courant n'est pas suffisant pour permettre une charge ultrarapide, elle pourra bien entendue être réalisée plus lentement.

Cette variante permet avantageusement de discriminer entre les sources d'énergie appliquées en entrée selon leur aptitude à fournir un courant suffisant ou non pour à la fois charger la batterie 10 et alimenter l'appareil extérieur. En effet, une source d'énergie présentant une tension supérieure ou égale à 12 Volts correspond généralement à une batterie de véhicule automobile qui est capable de fournir un courant suffisant pour simultanément charger la batterie 10 et alimenter l'appareil extérieur. Au contraire, une source d'énergie présentant une tension inférieure à 12 Volts correspond généralement à une source de faible puissance qu'il convient alors plus avantageusement d'utiliser pour la seule alimentation de l'appareil extérieur lorsque celui-ci est branché au cordon 8. C'est le cas notamment lorsque la source basse tension est une dynamo de bicyclette ou encore une pile standard type R61 9 Volts, R12 4,5 Volts ou similaire. Dans le cas des piles, cette variante se justifie d'autant plus par le fait que ces piles constituent elles-mêmes un élément de stockage d'énergie facilement transportable par un individu : il est alors plus avantageux d'alimenter directement l'appareil extérieur sans stockage intermédiaire dans la batterie 10 qui implique nécessairement des pertes de rendement ainsi que de temps.

Une alternative à cette variante consiste à ne pas opérer automatiquement la sélection entre la seule alimentation de l'appareil extérieur et la charge simultanée de la batterie 10, en fonction de la tension de la source d'énergie connectée en entrée. Au lieu de cela, l'alimentation peut comporter un interrupteur manuel permettant à l'utilisateur sélectivement de permettre ou d'empêcher la charge de la batterie 10 à partir de la source d'énergie branchée en entrée. Par conséquent, il peut choisir lui-même s'il souhaite alimenter uniquement l'appareil extérieur branché à l'alimentation ou charger simultanément la batterie 10.

Bien entendu, la présente invention n'est pas limitée aux exemples et aux modes de réalisation décrits et représentés, mais elle est susceptible de nombreuses variantes accessibles à l'homme de l'art.

Ainsi, les alimentations 5, 15, 25 et 35 peuvent toutes comprendre un boîtier 23 qui loge l'ensemble des circuits qui en font parties, y compris la batterie 10, avec les fiches des cordons 7, 8 et le cas échéant 17, qui sont accessibles depuis l'extérieur du boîtier 23. Le boîtier 23 a été représenté symboliquement en traits mixtes sur les figures. En variante, la batterie 10 peut être extérieure au boîtier 23 et amovible. Dans ce cas, l'alimentation peut comprendre un connecteur - par exemple placé dans un logement réalisé dans le boîtier 23 et accessible depuis l'extérieur du boîtier - pour permettre de connecter et déconnecter la batterie 10. Cette variante a pour avantage de pouvoir charger successivement plusieurs batteries 10 et ensuite de les utiliser successivement pour alimenter l'appareil extérieur. Dans ce cas, il peut en outre être prévu d'utiliser un cordon séparé - incluant le cas échéant un circuit limiteur de courant similaire à celui référencé 9 - pour brancher l'appareil extérieur à la batterie 10, sans l'intermédiaire de l'alimentation dans le boîtier 23. Autrement dit, l'alimentation dans le boîtier 23 sert à recharger la batterie 10 qui peut ensuite être séparée du boîtier 23 et raccordée avec le cordon séparé à l'appareil extérieur pour alimenter celui-ci. Le cordon 8 de l'alimentation dans le boîtier 23 peut même être supprimé dans ce cas-là.

Par ailleurs, la batterie 10 peut être remplacée par tout moyen de stockage d'énergie électrique approprié, acceptant de préférence d'être chargé de façon ultrarapide. Il peut s'agir notamment de supercondensateurs. Il peut s'agir par exemple de supercondensateurs ayant des capacités de l'ordre de 3000 Farad commercialisés par la société coréenne Ness.

Bien entendu, l'invention peut être mise en oeuvre avec une batterie 10 ou un autre moyen de stockage d'énergie électrique n'autorisant pas une charge ultrarapide auquel cas l'alimentation de l'invention peut ne pas être prévu pour pouvoir réaliser ce type de charge.

Une autre variante consiste à prévoir un panneau solaire 21 - par exemple de 7,2 Volts - sur le boîtier 23 et qui permet également de charger la batterie 10 et/ou d'alimenter l'appareil extérieur. Une diode 22 peut là aussi être prévue pour éviter que la batterie 10, la batterie 2 ou une autre source d'énergie branchée à l'entrée de l'alimentation puisse se décharger dans le panneau solaire. Un tel panneau solaire peut avantageusement procurer une énergie électrique en l'absence de toute autre source disponible.

Bien entendu, les cordons avec fiches 7, 8 et 17 peuvent être remplacés par tout autre moyen approprié permettant de brancher les sources d'énergie en entrée, ainsi que l'appareil extérieur.

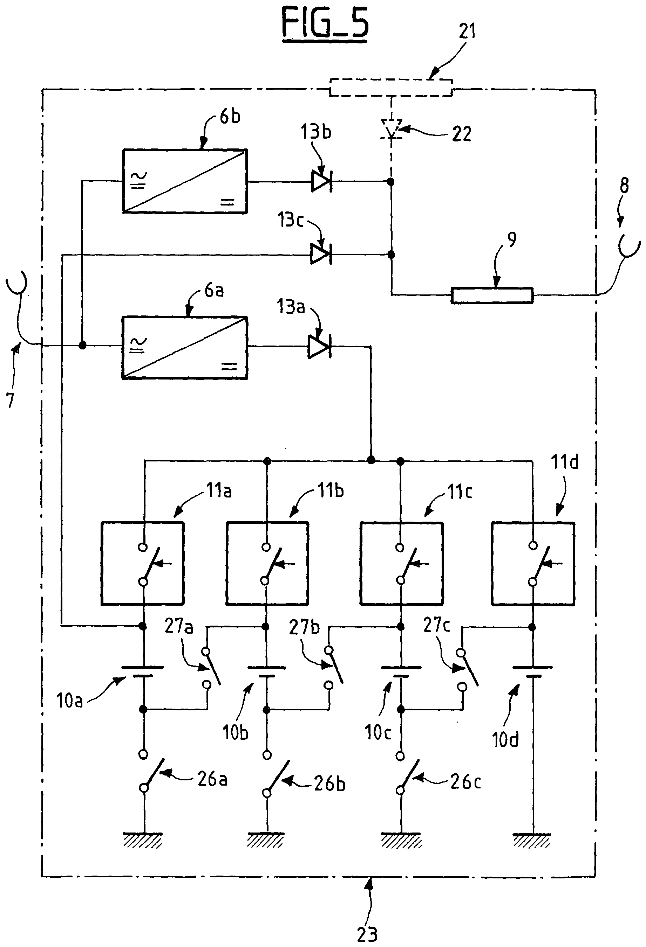

La batterie 10 est généralement constitué de plusieurs cellules d'accumulateur élémentaires reliées en série pour obtenir la tension de batterie souhaitée - cf. les exemples citées en relation avec les figures 1 et 3. Par conséquent, la charge de la batterie 10 est effectuée classiquement sur la batterie 10 avec ses cellules reliées en série. En variante, la charge de la batterie 10 peut être réalisée de façon individuelle pour chacune des cellules de la batterie 10. Une telle variante est représentée par la figure 5 et est basé sur l'alimentation 5 de la figure 2. Les référence 8 et 9 désignent respectivement le circuit limiteur de courant et le cordon servant à brancher l'appareil extérieur à alimenter. La batterie 10 prise en exemple comprend quatre cellules élémentaire 10a-10d. A chacune des cellules 10a-10d correspond un circuit de contrôle de charge 11a-11d. L'objet de chacun des circuits de contrôle de charge 11a-11d est de réaliser une charge ultrarapide de la cellule qui lui correspond. Le courant est fourni par un convertisseur 6a qui remplace le convertisseur 6 de l'alimentation 2. Le convertisseur 6a diffère du convertisseur 6 en ce qu'il délivre une tension adéquate pour charger une cellule de la batterie, et non la batterie dans son ensemble. On retrouve une diode 13a à la sortie du convertisseur 6a et jouant le même rôle que la diode 13 dans l'alimentation 5. Les circuits de contrôle de charge 11a-11d sont similaires au circuit de contrôle 11 de l'alimentation 5, sauf en ce qu'ils sont prévus chacun pour le contrôle d'une seule cellule de batterie, au lieu de l'ensemble de la batterie. Une série d'interrupteurs commandés 27a-27c - par exemple des transistors MOS - permettent - lorsqu'ils sont fermés - de relier les cellules en série de façon à constituer la batterie 10. Une autre série d'interrupteurs commandés 26a-26c - par exemple des transistors MOS - permettent - lorsqu'ils sont fermés - de relier une borne de chaque cellule de batterie - sauf la dernière référencée 10d - à la masse, l'autre borne des cellules étant branchée de façon permanente à leur circuit de contrôle de charge respectif 11a-11d. La cellule 10d est elle reliée en permanence à la masse. Par ailleurs, la borne de la première cellule 10a qui est connectée à son circuit de contrôle de charge 11a, est également reliée au cordon 8 via le circuit limiteur de courant 9. cela est réalisée de préférence par le biais d'une autre diode 13c évitant l'injection d'un courant vers la cellule 10a par la batterie 2 ou le convertisseur 13b qui sera décrit plus loin. Lorsqu'il s'agit de charger la batterie 10, un circuit de commande - non représenté - ouvre les interrupteurs 27a-27c et ferment les interrupteurs 26a-26c. De cette façon, chacune des cellules 10a-10c est mise en charge par le biais de son circuit de contrôle de charge 11a-11c. Au contraire, lorsqu'il s'agit d'alimenter l'appareil extérieur branché sur le cordon 8, le circuit de commande ouvre les interrupteurs 26a-26c et ferment les interrupteurs 27a-27c. La tension résultant de la mise en série des cellules 10a-10d est alors appliquée à l'appareil par le biais de la diode 13c et le circuit limiteur de courant 9. L'alimentation peut être muni d'un convertisseur supplémentaire 6b s'il est souhaité pouvoir simultanément charger les cellules 10a-10d et alimenter l'appareil branché au cordon 8 lorsque le cordon 7 est branché au secteur. Le convertisseur 6b reçoit également en entrée le secteur grâce au cordon 7. Le convertisseur 6b fournit en sortie une tension permettant d'alimenter directement l'appareil via le circuit limiteur de courant 9. Là encore, une diode 13b assure le couplage au circuit limiteur de courant 9. Cette dernière variante permet une charge plus fiable de la batterie en raison du contrôle individuel de chaque cellule de batterie. Bien entendu, cette variante peut être adaptée à n'importe quel mode de réalisation décrit précédemment, notamment aux alimentations 15, 25 et 35.

L'on comprendra que le dispositif selon l'invention permet d'alimenter toute sorte d'appareil électrique, notamment des appareils ne possédant pas une batterie propre au contraire du téléphone portable pris en exemple. Ainsi peut-on par exemple alimenter un poste radio.

Selon encore une autre variante, le circuit de contrôle de charge 11 et la batterie 10 sont supprimés dans les alimentations 15 et 35. Il en résulte alors simplement une alimentation universelle permettant l'alimentation de l'appareil extérieur au choix par le secteur ou par une source d'énergie basse tension, voir par le panneau solaire 21 intégré au boîtier 23. Mais l'alimentation n'offre plus de possibilité de stockage propre d'énergie électrique.

Par ailleurs, pour assurer une portabilité optimale du dispositif d'alimentation de l'invention - qu'il comprenne un moyen de stockage d'énergie 10 ou non - , son poids est de préférence inférieure ou égale à trois fois, plus avantageusement à une fois et demi et encore plus avantageusement à une fois le poids de l'appareil qu'il est destiné alimenter dans le cas où cet appareil est un téléphone portable ou encore un agenda électronique de poche. De façon similaire, son poids est de préférence inférieure ou égale à 20 %, plus avantageusement à 10 % du poids de l'appareil qu'il est destiné alimenter dans le cas où cet appareil est un ordinateur portable.

Enfin, l'on remarquera que le mode de réalisation de la figure 1 illustre le fait que le recours à un moyen de stockage d'énergie tampon 10 est indépendante de la possibilité pour le dispositif de l'invention de pouvoir être alimenté à partir d'une alimentation secteur ou à partir d'une source d'énergie électrique basse tension.

## Revendications

1. Dispositif d'alimentation électrique portable, comprenant :
- un moyen de connexion (8) permettant de brancher un appareil (1) comportant au moins une batterie d'alimentation (2) ;
- un circuit d'alimentation (6 ; 16) fournissant en sortie une tension d'alimentation ;
- un moyen de stockage d'énergie électrique rechargeable (10), le circuit chargeant le moyen de stockage d'énergie (10) de façon ultrarapide lorsque le circuit est branché à une source d'énergie électrique appropriée, le moyen de connexion (8) permettant d'alimenter l'appareil (1) et/ou de charger la batterie d'alimentation de l'appareil à partir du moyen de stockage d'énergie (10) ; et
dans lequel ledit circuit est adapté pour que:
- lorsque le circuit est branché à une source d'énergie électrique présentant une tension inférieure à un seuil prédéterminé, le circuit alimente l'appareil (1) branché au moyen de connexion (8), mais ne charge pas le moyen de stockage d'énergie (10) ; et
- lorsque le circuit est branché à une source d'énergie électrique présentant une tension supérieure ou égale audit seuil prédéterminé, le circuit alimente l'appareil (1) branché au moyen de connexion (8) et charge le moyen de stockage d'énergie (10).

2. Dispositif selon la revendication 1, dans lequel la tension d'alimentation pour l'appareil (1) fournie en sortie par le circuit (6 ; 16) est une basse tension.

3. Dispositif selon la revendication 1 ou 2, dans lequel le circuit est prévu pour être branché soit à une alimentation secteur soit à une source d'énergie électrique basse tension.

4. Dispositif selon la revendication 1, 2 ou 3, dans lequel le moyen de stockage d'énergie électrique comprend une batterie rechargeable (10).

5. Dispositif selon la revendication 4, dans lequel :
- le moyen de stockage d'énergie électrique comprend une batterie rechargeable (10) ;
- la batterie (10) comprend plusieurs cellules accumulatrices (10a-10d) branchées en série lorsque la batterie (10) alimente l'appareil (1) branché au moyen de connexion (8) ; et
- chaque cellule (10a-10b) de la batterie est chargée de façon ultrarapide à travers un circuit de contrôle de charge respectif (11a-11d).

6. Dispositif selon l'une quelconque des revendications 1 à 5, dans lequel le circuit comprend un convertisseur (16) fournissant en sortie une tension donnée servant à alimenter l'appareil (1) branché au moyen de connexion (8) et à charger le moyen de stockage (10), lorsque le circuit est branché à une source d'énergie électrique basse tension.

7. Dispositif selon la revendication 6, dans lequel le moyen de stockage d'énergie (10) alimente l'appareil (1) branché au moyen de connexion (8) par l'intermédiaire du convertisseur (16) fonctionnant en élévateur de tension lorsque la tension aux bornes du moyen de stockage d'énergie (10) est inférieure à un seuil prédéterminé.

8. Dispositif selon la revendication 6 ou 7, dans lequel, lorsque le circuit est branché à une source d'énergie électrique basse tension présentant une tension comprise dans une plage de tensions prédéterminée incluant la tension que fournie en sortie le convertisseur (16), le circuit alimente l'appareil (1) branché au moyen de connexion (8), et/ou charge le moyen de stockage d'énergie (10), à partir de la source d'énergie électrique sans l'intermédiaire du convertisseur (16).

9. Dispositif selon la revendication 8, dans lequel ledit seuil prédéterminé est 12 Volts.

10. Dispositif selon l'une quelconque des revendications 1 à 9, comprenant un interrupteur manuel permettant à un utilisateur sélectivement de permettre ou d'empêcher la charge du moyen de stockage d'énergie (10) par le circuit lorsque le circuit est branché à une source d'énergie électrique.

11. Dispositif selon l'une quelconque des revendications précédentes, comprenant un circuit (9) limitant le courant fourni à l'appareil (1).

12. Dispositif selon l'une quelconque des revendications précédentes, comprenant en outre un panneau solaire (21) permettant d'alimenter l'appareil (1) et/ou charger le moyen de stockage d'énergie (10).

13. Dispositif selon l'une quelconque des revendications précédentes, comprenant des moyens de connexion pour connecter un moyen de stockage d'énergie électrique amovible et portable dans lequel, lorsque ledit moyen de stockage d'énergie électrique amovible est connecté aux dits moyens de connexion, le circuit d'alimentation charge de façon ultrarapide le moyen de stockage d'énergie amovible lorsque le circuit d'alimentation est branché à une source d'énergie électrique appropriée.

14. Dispositif d'alimentation électrique portable selon l'une quelconque des revendications 1 à 13, destiné à être utilisé pour charger une batterie d'alimentation (2) d'un appareil (1) qui n'est pas conçu pour permettre une charge ultrarapide de ladite batterie d'alimentation.

15. Utilisation du dispositif selon l'une quelconque des revendications 1 à 14 pour alimenter un appareil électrique.

16. Utilisation selon la revendication 15, l'appareil étant de type portable.

17. Utilisation selon la revendication 16, l'appareil étant un téléphone portable ou un ordinateur portable ou un agenda électronique de poche.

18. Utilisation selon l'une quelconque des revendications 15 à 17, dans lequel le dispositif recharge une batterie d'alimentation (2) de l'appareil électrique.

## Patentansprüche

1. Tragbare Stromversorgungsvorrichtung, umfassend:
- ein das Anschließen eines Geräts (1) umfassend wenigstens eine Versorgungsbatterie (2) ermöglichendes Anschlussmittel (8);
- einen am Ausgang eine Versorgungsspannung liefernden Versorgungskreis (6; 16);
- ein aufladbares Stromspeichermittel (10), wobei die Schaltung das Stromspeichermittel (10) ultraschnell lädt, wenn die Schaltung an einer geeigneten Stromquelle angeschlossen ist, wobei das Anschlussmittel (8) das Versorgen des Geräts (1) und/oder das Laden der Versorgungsbatterie des Geräts mit dem Stromspeichermittel (10) ermöglicht; und
wobei die Schaltung so ausgebildet ist, dass:
- wenn die Schaltung an einer Stromquelle mit einer Spannung unterhalb einer vorgegebenen Schwelle angeschlossen ist, die Schaltung das am Anschlussmittel (8) angeschlossene Gerät (1) versorgt, aber das Stromspeichermittel (10) nicht lädt; und
- wenn die Schaltung an einer Stromquelle mit einer Spannung oberhalb oder gleich der vorgegebenen Schwelle angeschlossen ist, die Schaltung das am Anschlussmittel (8) angeschlossene Gerät (1) versorgt und das Stromspeichermittel (10) lädt.

2. Vorrichtung nach Anspruch 1, wobei die am Ausgang von der Schaltung (6; 16) gelieferte Versorgungsspannung für das Gerät (1) eine Niederspannung ist.

3. Vorrichtung nach Anspruch 1 oder 2, wobei die Schaltung ausgebildet ist, an einer Netzversorgung oder einer Niederspannungs-Stromquelle angeschlossen zu werden.

4. Vorrichtung nach Anspruch 1, 2 oder 3, wobei das Stromspeichermittel eine aufladbare Batterie (10) umfasst.

5. Vorrichtung nach Anspruch 4, wobei:
- das Stromspeichermittel eine aufladbare Batterie (10) umfasst;
- die Batterie (10) mehrere in Reihe angeschlossene Akkumulatorzellen (10a-10d) umfasst, wenn die Batterie (10) das am Anschlussmittel (8) angeschlossene Gerät (1) versorgt; und
- jede Zelle (10a-10b) der Batterie ultraschnell über einen entsprechenden Ladesteuerkreis (11a-11d) geladen wird.

6. Vorrichtung nach einem der Ansprüche 1 bis 5, wobei die Schaltung einen am Ausgang eine vorgegebene Spannung zum Versorgen des am Anschlussmittel (8) angeschlossenen Geräts (1) und Laden des Speichermittels (10) liefernden Umrichter (16), wenn die Schaltung an einer Niederspannungs-Stromquelle angeschlossen ist, umfasst.

7. Vorrichtung nach Anspruch 6, wobei das Stromspeichermittel (10) das am Anschlussmittel (8) angeschlossene Gerät (1) über den als Wechselrichter dienenden Umrichter (16), wenn die Spannung an den Klemmen des Stromspeichermittels (10) unterhalb einer vorgegebenen Schwelle liegt, versorgt.

8. Vorrichtung nach Anspruch 6 oder 7, wobei, wenn die Schaltung an einer Niederspannungs-Stromquelle mit einer Spannung innerhalb eines vorgegebenen Spannungsbereichs einschließend die Spannung, die der Umrichter (16) am Ausgang liefert, angeschlossen ist, die Schaltung das am Anschlussmittel (8) angeschlossene Gerät (1) versorgt und/oder das Stromspeichermittel (10) von der Stromquelle ohne Vermittlung des Umrichters (16) lädt.

9. Vorrichtung nach Anspruch 8, wobei die vorgegebene Schwelle 12 Volt beträgt.

10. Vorrichtung nach einem der Ansprüche 1 bis 9, umfassend einen Handschalter, der es einem Benutzer ermöglicht, selektiv das Laden des Stromspeichermittels (10) durch die Schaltung zu ermöglichen oder zu verhindern, wenn die Schaltung an einer Stromquelle angeschlossen ist.

11. Vorrichtung nach einem der vorhergehenden Ansprüche, umfassend eine Schaltung (9), die dem Gerät (1) gelieferten Strom begrenzt.

12. Vorrichtung nach einem der vorhergehenden Ansprüche, umfassend ferner eine Solarzelle (21), die das Versorgen des Geräts (1) und/oder Laden des Energiespeichermittels (10) ermöglicht.

13. Vorrichtung nach einem der vorhergehenden Ansprüche, umfassend Anschlussmittel zum Anschließen eines transportablen und tragbaren Stromspeichermittels, wobei, wenn das transportable und tragbare Stromspeichermittel an die Anschlussmittel angeschlossen ist, der Versorgungskreis das transportable Stromspeichermittel ultraschnell lädt, wenn der Versorgungskreis an einer geeigneten Stromquelle angeschlossen ist.

14. Tragbare Stromversorgungsvorrichtung nach einem der Ansprüche 1 bis 13, ausgebildet zum Verwenden zum Laden einer Versorgungsbatterie (2) eines Geräts (1), das nicht zum Ermöglichen eines ultraschnellen Ladens der Versorgungsbatterie ausgebildet ist.

15. Verwendung der Vorrichtung nach einem der Ansprüche 1 bis 14 zum Versorgen eines Elektrogeräts.

16. Verwendung nach Anspruch 15, wobei das Gerät tragbar ist.

17. Verwendung nach Anspruch 16, wobei das Gerät ein tragbares Telefon oder ein tragbarer Computer oder ein elektronischer Taschenplaner ist.

18. Verwendung nach einem der Ansprüche 15 bis 17, wobei die Vorrichtung eine Versorgungsbatterie (2) des Elektrogeräts lädt.

## Claims

1. Portable electrical power supply device, comprising:
- a connection means (8) enabling the connexion of an appliance (1) including at least one power supply battery (2);
- a power supply circuit (6; 16) delivering, as output, a supply voltage;
- a rechargeable electrical energy storage means (10), the circuit charging the energy storage means (10) in an ultrafast manner when the circuit is connected to a suitable electrical energy source, the connection means (8) enabling the power supply of the appliance (1) and/or the charge of the appliance power supply battery from the energy storage means (10); and
in which said circuit is adapted such that:
- when the circuit is connected to an electrical energy source having a voltage that is lower than a predetermined threshold, the circuit supplies power to the appliance (1) that is connected to the connection means (8), but does not charge the energy storage means (10); and
- when the circuit is connected to an electrical energy source having a voltage that is higher than or equal to said predetermined threshold, the circuit supplies power to the appliance (1) that is connected to the connection means (8) and charges the energy storage means (10).

2. Device according to Claim 1, in which the supply voltage for the appliance (1) delivered as output by the circuit (6; 16) is a low voltage.

3. Device according to Claim 1 or 2, in which provision is made for the circuit to be connected either to a mains power supply or to a low-voltage electrical energy source.

4. Device according to Claim 1, 2 or 3, in which the electrical energy storage means comprises a rechargeable battery (10).

5. Device according to Claim 4, in which:
- the electrical energy storage means comprises a rechargeable battery (10);
- the battery (10) comprises a plurality of accumulator cells (10a-10d) that are connected in series when the battery (10) supplies power to the appliance (1) that is connected to the connection means (8); and
- each cell (10a-10b) of the battery is charged in an ultrafast manner through a respective charge control circuit (11a-11d).

6. Device according to any one of Claims 1 to 5, in which the circuit comprises a converter (16) delivering, as output, a given voltage serving to supply power to the appliance (1) that is connected to the connection means (8) and to charge the storage means (10), when the circuit is connected to a low-voltage electrical energy source.

7. Device according to Claim 6, in which the energy storage means (10) supply power to the appliance (1) that is connected to the connection means (8) via the converter (16) operating in voltage boost mode when the voltage across the terminals of the energy storage means (10) is lower than a predetermined threshold.

8. Device according to Claim 6 or 7, in which, when the circuit is connected to a low-voltage electrical energy source having a voltage comprised within a predetermined range of voltages including the voltage that the converter (16) delivers as output, the circuit supplies power to the appliance (1) that is connected to the connection means (8), and/or charges the energy storage means (10), from the electrical energy source without the use of the converter (16).

9. Device according to Claim 8, in which said predetermined threshold is 12 volts.

10. Device according to any one of Claims 1 to 9, comprising a manual switch allowing a user to selectively allow or prevent the charging of the energy storage means (10) by the circuit when the circuit is connected to an electrical energy source.

11. Device according to any one of the preceding claims, comprising a circuit (9) limiting the current delivered to the appliance (1).

12. Device according to any one of the preceding claims, further comprising a solar panel (21) enabling the power supply of the appliance (1) and/or the charge of the energy storage means (10).

13. Device according to any one of the preceding claims, comprising connection means for connecting a removable and portable electrical energy storage means in which, when said removable electrical energy storage means is connected to said connection means, the power supply circuit charges, in an ultrafast manner, the removable energy storage means when the power supply circuit is connected to a suitable electrical energy source.

14. Portable electrical power supply device according to any one of Claims 1 to 13, intended to be used to charge a power supply battery (2) of an appliance (1) which is not designed to enable said power supply battery to be charged in an ultrafast manner.

15. Use of the device according to any one of Claims 1 to 14 to supply power to an electrical appliance.

16. Use according to Claim 15, the appliance being portable.

17. Use according to Claim 16, the appliance being a mobile phone or a laptop computer or a personal digital assistant.

18. Use according to any one of Claims 15 to 17, in which the device recharges a power supply battery (2) of the electrical appliance.
